# EUROPÄISCHE PATENTSCHRIFT

(11) **EP 3 668 684 B1**
(45) Veröffentlichungstag und Bekanntmachung des Hinweises auf die Patenterteilung: **31.03.2021**
(21) Anmeldenummer: 18740549.3
(22) Anmeldetag: 10.07.2018
(51) Int. Cl.: B24B 5/46, B23B 5/32

(54) **VORRICHTUNG UND VERFAHREN ZUR GLEICHZEITIGEN BEARBEITUNG MEHRERER RADSÄTZE EINES SCHIENENFAHRZEUGES**
DEVICE AND METHOD FOR SIMULTANEOUSLY MACHINING SEVERAL WHEEL SETS OF A RAIL VEHICLE
DISPOSITIF ET PROCÉDÉ POUR L'USINAGE SIMULTANÉ DE PLUSIEURS ESSIEUX MONTÉS D'UN VÉHICULE FERROVIAIRE

(30) Priorität: 14.08.2017 DE 102017118434
(43) Veröffentlichungstag der Anmeldung: 24.06.2020
(73) Patentinhaber: HEGENSCHEIDT-MFD GmbH, 41812 Erkelenz (DE)
(72) Erfinder: NAUMANN, John Oliver, 41849 Wassenberg (DE); MINGERS, Gregor, 52531 Übach-Palenberg (DE); NAUMANN, Hans-Jürgen, 09117 Chemnitz (DE)
(74) Vertreter: Cohausz & Florack
(86) Internationale Anmeldenummer: PCT/EP2018/068629
(87) Internationale Veröffentlichungsnummer: WO 2019/034333

(56) Entgegenhaltungen:
- EP-A2- 0 181 456
- CN-A- 106 424 760
- DE-A1- 1 605 334
- US-A- 3 848 513

## Beschreibung

Die Erfindung betrifft eine Vorrichtung zur Bearbeitung, insbesondere zur gleichzeitigen Bearbeitung mehrerer Radsätze eines Schienenfahrzeugs, umfassend: eine erste Unterflur-Radsatzdrehmaschine zum Reprofilieren von Rädern und Bremsscheiben von einem ersten Radsatz eines Schienenfahrzeugs, und eine zweite Unterflur-Radsatzdrehmaschine zum Reprofilieren von Rädern und Bremsscheiben von einem zweiten Radsatz eines Schienenfahrzeugs.

Die Erfindung betrifft zudem ein Verfahren zur Bearbeitung, insbesondere zur gleichzeitigen Bearbeitung mehrerer Radsätze eines Schienenfahrzeugs, umfassend die folgenden Schritte: a) Bereitstellen von: einer ersten Unterflur-Radsatzdrehmaschine zum Reprofilieren von Rädern und Bremsscheiben von einem ersten Radsatz eines Schienenfahrzeugs, und einer zweiten Unterflur-Radsatzdrehmaschine zum Reprofilieren von Rädern und Bremsscheiben von einem zweiten Radsatz eines Schienenfahrzeugs, b) Bereitstellen von wenigstens zwei zu bearbeitenden Radsätzen eines Schienenfahrzeugs, c) Verstellen des Abstand zwischen der zweiten Unterflur-Radsatzdrehmaschine und der ersten Unterflur-Radsatzdrehmaschine, d) Absetzen und Einspannen der wenigstens zwei zu bearbeitenden Radsätze auf den ihnen zugeordneten Unterflur-Radsatzdrehmaschinen, und e) Bearbeiten der wenigstens zwei zu bearbeitenden Radsätze des Schienenfahrzeugs auf den ihnen zugeordneten Unterflur-Radsatzdrehmaschinen.

Unterflur-Radsatzdrehmaschinen sind in unterschiedlichen Ausgestaltungen aus dem Stand der Technik bekannt, beispielsweise aus der DE 10 2006 007137 A1 oder der DE 202 14 942 U1 derselben Anmelderin. Weiterhin sind Vorrichtungen und Verfahren mit einer Kombination von vier Unterflur-Radsatzdrehmaschinen aus der CN106424760 bekannt, die dem Oberbegriff der Ansprüche 1 und 8 zugrunde liegt.

Üblicherweise sind Unterflur-Radsatzdrehmaschinen in einer Grube unterhalb eines Werkstattgleises angeordnet. Die zu reprofilierenden Radsätze werden über das Werkstattgleis im eingebauten Zustand oder per Kran im ausgebauten Zustand in die Maschine eingebracht. Für die Reprofilierung der Räder, wie auch der Bremsscheiben, werden die Radsätze von zwei mal zwei Reibrollen an den Laufflächen angetrieben. Zugleich werden die Radsätze von Fixierungen an ihren Achslagergehäusen gehalten. Zur Erzielung einer höchstmöglichen Bearbeitungsgenauigkeit unter Berücksichtigung einer hohen dynamischen Steifigkeit der Unterflur-Radsatzdrehmaschine werden die Radsätze an ihren Achslagergehäusen zentriert und über Axialführungsrollen in Achsrichtung geführt.

Mit vielen der bekannten Vorrichtungen und Verfahren kann üblicherweise nur ein Radsatz bearbeitet werden. Dies hat den Vorteil, dass die Ausrichtung des zu bearbeitenden Radsatzes relativ zu der Unterflur-Radsatzdrehmaschine besonders einfach ist, da die beiden Radscheiben des zu bearbeitenden Radsatzes jeweils von zwei Reibrollen abgestützt werden, wodurch eine Selbstzentrierung erreicht wird (stabiles Gleichgewicht). Eine sehr präzise Ausrichtung des zu bearbeitenden Radsatzes ist für ein gutes Bearbeitungsergebnis unerlässlich. Die übrigen, nicht bearbeiteten Radsätze stehen derweil auf dem Werkstattgleis, sie brauchen nicht positioniert werden. Die einzelnen Radsätze eines Schienenfahrzeugs müssen daher bei den bekannten Vorrichtungen und Verfahren nacheinander bearbeitet werden, was die Bearbeitungszeit erhöht.

Um den Nachteil der hohen Bearbeitungszeit auszugleichen, wurde bereits vorgeschlagen, die zu bearbeitenden Radsätze aus dem Schienenfahrzeug bzw. aus dessen Drehgestell auszubauen und gleichzeitig auf mehreren Radsatzdrehmaschinen zu bearbeiten. Auch dies hat den Vorteil einer recht einfachen Ausrichtung der zu bearbeitenden Radsätze relativ zu den Radsatzdrehmaschinen, da die Radsätze im ausgebauten Zustand voneinander entkoppelt sind. Ein Nachteil dieser Vorgehensweise liegt jedoch in dem erheblichen Aufwand für den Ausbau und Wiedereinbau der Radsätze.

Vor diesem Hintergrund liegt der Erfindung die Aufgabe zugrunde, die bekannten und zuvor beschriebenen Vorrichtungen und Verfahren derart auszugestalten und weiterzubilden, dass die gleichzeitige Bearbeitung mehrerer Radsätze eines Schienenfahrzeugs im eingebauten Zustand ermöglicht wird.

Diese Aufgabe wird durch die Merkmalskombination von Anspruch 1 gelöst.

Die Erfindung betrifft eine Vorrichtung zur Bearbeitung, insbesondere zur gleichzeitigen Bearbeitung mehrerer Radsätze eines Schienenfahrzeugs. Insbesondere dient die Vorrichtung dazu, mehrere Radsätze eines Schienenfahrzeugs gleichzeitig zu bearbeiten. Die Bearbeitung der Radsätze soll im eingebauten Zustand erfolgen, die Radsätze sollen also während der Bearbeitung nicht von dem Schienenfahrzeug getrennt sein. Die Vorrichtung umfasst hierzu eine erste Unterflur-Radsatzdrehmaschine zum Reprofilieren von Rädern und Bremsscheiben von einem ersten Radsatz eines Schienenfahrzeugs, und eine zweite Unterflur-Radsatzdrehmaschine zum Reprofilieren von Rädern und Bremsscheiben von einem zweiten Radsatz eines Schienenfahrzeugs. Die Kombination von zwei Unterflur-Radsatzdrehmaschinen wird auch als "Tandem-Anordnung" bezeichnet. Die erste Unterflur-Radsatzdrehmaschine und die zweite Unterflur-Radsatzdrehmaschine können beispielsweise dazu bestimmt sein, zwei weit auseinanderliegende Radsätze eines Schienenfahrzeugs zu bearbeiten (z.B. "Single-Radsätze" eines Güterwagens oder Güterwaggons). In diesem Fall sind die beiden Unterflur-Radsatzdrehmaschine vorzugsweise wenigstens 4 m, insbesondere wenigstens 5 m voneinander entfernt angeordnet. Alternativ hierzu können die erste Unterflur-Radsatzdrehmaschine und die zweite Unterflur-Radsatzdrehmaschine dazu bestimmt sein, zwei weniger weit auseinanderliegende Radsätze desselben Drehgestells eines Schienenfahrzeugs zu bearbeiten (z.B. eines Schnellzuges oder eines Hochgeschwindigkeitszuges). In diesem Fall kann der Abstand zwischen den beiden Unterflur-Radsatzdrehmaschinen im Bereich zwischen 1,5 m und 3,5 m liegen.

Erfindungsgemäß wird vorgeschlagen, dass der Abstand zwischen der zweiten Unterflur-Radsatzdrehmaschine und der ersten Unterflur-Radsatzdrehmaschine verstellbar ist. Insbesondere kann vorgesehen sein, dass der Abstand zwischen der zweiten Unterflur-Radsatzdrehmaschine und der ersten Unterflur-Radsatzdrehmaschine in Fahrtrichtung (also in Längsrichtung des Schienenfahrzeugs bzw. in Längsrichtung des Gleises) verstellbar ist. Indem der Abstand zwischen den beiden Unterflur-Radsatzdrehmaschinen verstellt werden kann, kann eine Anpassung an Schienenfahrzeuge mit unterschiedlichen Radständen erreicht werden. Zudem kann durch die Verstellbarkeit des Abstands eine Feineinstellung erreicht werden, die erforderlich sein kann, wenn der tatsächliche Abstand zwischen zwei Radsätzen von dem erwarteten (Nenn-)Abstand abweicht (beispielsweise infolge von Temperaturschwankungen). Eine Verstellung bzw. Veränderung des Abstands zwischen beiden Unterflur-Radsatzdrehmaschinen kann beispielsweise dadurch erreicht werden, dass eine und/oder beide Unterflur-Radsatzdrehmaschinen in Fahrtrichtung verschiebbar gelagert sind. Es kann vorgesehen sein, dass bestimmte Teile der Unterflur-Radsatzdrehmaschinen (insb. die zur Lagerung der Radsätze bestimmten Reibrollen) verschiebbar gelagert sind oder dass die gesamten Unterflur-Radsatzdrehmaschinen verschiebbar gelagert sind. Bei einer Konfiguration mit zwei Unterflur-Radsatzdrehmaschinen ist es grundsätzlich ausreichend, eine der beiden Unterflur-Radsatzdrehmaschinen verschiebbar zu lagern, in diesem Fall bildet die feststehende, unbeweglich gelagerte Unterflur-Radsatzdrehmaschine einen "Referenzpunkt" für die zweite (und ggf. weitere) verschiebbar gelagerte Unterflur-Radsatzdrehmaschine. Mit einer Verstellbarkeit bzw. Verschiebung "in Fahrtrichtung" ist grundsätzlich auch eine Verschiebung in die Gegenrichtung, also entgegen der Fahrtrichtung gemeint, es soll also eine beidseitige Verstellbarkeit gegeben sein. Die erste und/oder die zweite Unterflur-Radsatzdrehmaschinen sind vorzugsweise um wenigstens 50 cm in Fahrtrichtung verschiebbar.

Die Vorrichtung ist weiter gekennzeichnet durch eine dritte Unterflur-Radsatzdrehmaschine zum Reprofilieren von Rädern und Bremsscheiben von einem dritten Radsatz eines Schienenfahrzeugs, und eine vierte Unterflur-Radsatzdrehmaschine zum Reprofilieren von Rädern und Bremsscheiben von einem vierten Radsatz eines Schienenfahrzeugs. Durch diese Ausgestaltung der Vorrichtung wird erreicht, dass nicht nur zwei, sondern bis zu vier Radsätze im eingebauten Zustand gleichzeitig bearbeitet werden können. Beispielsweise können jeweils zwei der vier Unterflur-Radsatzdrehmaschinen ein "Paar" bzw. "Tandem" bilden, das den beiden Radsätzen eines Drehgestells zugeordnet ist. Wenn zwei derartige Paare von Unterflur-Radsatzdrehmaschinen vorhanden sind, kann von einer "Doppel-Tandem"-Anordnung gesprochen werden. Dies ermöglicht es, Schienenfahrzeuge mit zwei Drehgestellen mit jeweils zwei Radsätzen in einem Schritt zu bearbeiten.

Weiterhin ist vorgesehen, dass der Abstand zwischen der dritten Unterflur-Radsatzdrehmaschine und der ersten Unterflur-Radsatzdrehmaschine verstellbar ist und/oder dass der Abstand zwischen der vierten Unterflur-Radsatzdrehmaschine und der ersten Unterflur-Radsatzdrehmaschine verstellbar ist. Insbesondere kann vorgesehen sein, dass der Abstand zwischen der dritten Unterflur-Radsatzdrehmaschine und der ersten Unterflur-Radsatzdrehmaschine in Fahrtrichtung (also in Längsrichtung des Schienenfahrzeugs bzw. in Längsrichtung des Gleises) verstellbar ist. Ebenso kann vorgesehen sein, dass der Abstand zwischen der vierten Unterflur-Radsatzdrehmaschine und der ersten Unterflur-Radsatzdrehmaschine in Fahrtrichtung (also in Längsrichtung des Schienenfahrzeugs bzw. in Längsrichtung des Gleises) verstellbar ist. Indem nicht nur der Abstand zwischen der zweiten Unterflur-Radsatzdrehmaschine und der ersten Unterflur-Radsatzdrehmaschine verstellbar ist, sondern auch der Abstand zwischen der dritten Unterflur-Radsatzdrehmaschine und/oder der vierten Unterflur-Radsatzdrehmaschine und der ersten Unterflur-Radsatzdrehmaschine verstellbar ist, kann eine Anpassung an Schienenfahrzeuge mit unterschiedlichen Radständen sowie unterschiedlichen Drehgestellabständen erreicht werden. Die erste (nicht zwingend, aber möglicherweise) verschiebbare Unterflur-Radsatzdrehmaschine bildet also einen "Referenzpunkt" für einen ersten zu bearbeitenden Radsatz. Die anderen drei Unterflur-Radsatzdrehmaschinen können dann relativ zu der ersten Unterflur-Radsatzdrehmaschine in Fahrtrichtung verschoben werden, um die von ihnen zu bearbeitenden Radsätze zu erreichen. Auch bei dieser Konfiguration der Vorrichtung kann durch die Verstellbarkeit des Abstands eine Feineinstellung erreicht werden, die erforderlich sein kann, wenn der tatsächlich Abstand zwischen zwei Radsätzen von dem erwarteten (Nenn-)Abstand abweicht (beispielsweise infolge von Temperaturschwankungen). Die Verstellung bzw. Veränderung der Abstände kann auch hier beispielsweise dadurch erreicht werden, dass die dritte und/oder die vierte Unterflur-Radsatzdrehmaschine in Fahrtrichtung verschiebbar gelagert ist. Es kann vorgesehen sein, dass bestimmte Teile der Unterflur-Radsatzdrehmaschinen (insb. die zur Lagerung der Radsätze bestimmten Reibrollen) verschiebbar gelagert sind oder dass die gesamten Unterflur-Radsatzdrehmaschinen verschiebbar gelagert sind. Die dritte und/oder die vierte Unterflur-Radsatzdrehmaschinen sind vorzugsweise um wenigstens 50 cm, insbesondere um wenigstens 100 cm in Fahrtrichtung verschiebbar.

Die Anzahl der Unterflur-Radsatzdrehmaschinen ist nicht auf vier Maschinen begrenzt, sondern kann auf beliebig viele Unterflur-Radsatzdrehmaschinen erhöht werden. Es kann also eine fünfte (und weitere) Unterflur-Radsatzdrehmaschine zum Reprofilieren von Rädern und Bremsscheiben von einem fünften Radsatz (und weiteren Radsätzen) eines Schienenfahrzeugs vorgesehen sein. Sofern eine fünfte (und weitere) Unterflur-Radsatzdrehmaschinen vorhanden sind, kann vorgesehen sein, dass auch der Abstand zwischen der fünften (und der weiteren) Unterflur-Radsatzdrehmaschine und der ersten Unterflur-Radsatzdrehmaschine verstellbar ist. Auf diese Weise können fünf oder mehr Radsätze gleichzeitig bearbeitet werden. Dies ermöglicht sogar die gleichzeitige Bearbeitung der Radsätze eines gesamten Zuges, also die gleichzeitige Bearbeitung von Radsätzen unterschiedlicher Wagen.

Nach einer weiteren Ausgestaltung der Vorrichtung ist vorgesehen, dass die erste Unterflur-Radsatzdrehmaschine und/oder die zweite Unterflur-Radsatzdrehmaschine und/oder die dritte Unterflur-Radsatzdrehmaschine und/oder die vierte Unterflur-Radsatzdrehmaschine Folgendes umfasst: einen Maschinenständer, einen Querbalken zur Überbrückung eines Werkstattgleises mit zwei Schienen in Querrichtung, zwei Rollenträger, vier Reibrollen, wenigstens einen Reibrollenantrieb zum Antreiben der Reibrollen, und wenigstens eine Axialführungsrolle zur axialen Führung des Radsatzes, wobei der Querbalken auf dem Maschinenständer gelagert ist, wobei die Rollenträger beweglich mit dem Maschinenständer verbunden sind, und wobei die Reibrollen drehbar an dem Rollenträger gelagert sind. Derartige Unterflur-Radsatzdrehmaschine sind besonders gut zur Bearbeitung von Radsätzen und deren Laufflächen sowie Bremsscheiben geeignet.

Gemäß einer weiteren Ausbildung der Vorrichtung ist vorgesehen, dass die erste Unterflur-Radsatzdrehmaschine und die zweite Unterflur-Radsatzdrehmaschine in entgegengesetzter Richtung angeordnet sind und/oder dass eine erste Schienenstütze zwischen diesen beiden Unterflur-Radsatzdrehmaschinen angeordnet ist. Unter einer entgegengesetzten Anordnung kann insbesondere eine Anordnung mit einer Symmetrieebene verstanden werden (Spiegelsymmetrie). Die beiden Unterflur-Radsatzdrehmaschinen stehen also "Rücken an Rücken". Diese Anordnung hat beispielsweise den Vorteil, dass die beiden Unterflur-Radsatzdrehmaschinen besonders dicht aneinander angeordnet werden können und somit auch Radsätze mit einem geringen Radstand bearbeiten können (beispielsweise zwei Radsätze desselben Drehgestells). Die dichte Anordnung kann dadurch erreicht werden, dass diejenigen Seiten der Unterflur-Radsatzdrehmaschinen mit weniger weit abstehenden Teilen einander zugeordnet werden, während diejenigen Seiten mit weiter abstehenden Teilen (beispielsweise Zugangstreppen) voneinander weg weisend angeordnet werden. Die zwischen den beiden Unterflur-Radsatzdrehmaschinen angeordnete Schienenstütze dient dem Zweck, die dort verlaufenden Schiebeschienen abzustützen, da diese Schienen andernfalls die in dem Werkstattboden eingelassene Grube ohne Abstützung überbrücken müssten. Alternativ hierzu kann vorgesehen sein, dass die erste Unterflur-Radsatzdrehmaschine und die zweite Unterflur-Radsatzdrehmaschine in gleicher Richtung angeordnet sind, beispielsweise bei zwei weit voneinander entfernten "Single-Maschinen".

Im Hinblick auf die erste Schienenstütze wird weiter vorgeschlagen, dass die erste Schienenstütze relativ zu der ersten Unterflur-Radsatzdrehmaschine und/oder relativ zu der zweiten Unterflur-Radsatzdrehmaschine verschiebbar ist. Durch eine Verschiebbarkeit der Schienenstütze in Fahrtrichtung kann die Position der Schienenstütze an die Positionen der - ebenfalls verschiebbaren - Unterflur-Radsatzdrehmaschinen angepasst werden. Insbesondere können die Unterflur-Radsatzdrehmaschinen bei einer verschiebbaren Schienenstütze über weitere Strecken verschoben werden, ohne gegen die Schienenstütze zu stoßen.

Eine weitere Ausgestaltung der Vorrichtung sieht vor, dass die dritte Unterflur-Radsatzdrehmaschine und die vierte Unterflur-Radsatzdrehmaschine in entgegengesetzter Richtung angeordnet sind. Erfindungsgemäß ist eine zweite Schienenstütze zwischen diesen beiden Unterflur-Radsatzdrehmaschinen angeordnet. Die Eigenschaften und Vorteile dieser Ausgestaltung wurden bereits zuvor im Zusammenhang mit der ersten und der zweiten Unterflur-Radsatzdrehmaschine näher beschrieben. Die spiegelsymmetrische Anordnung erlaubt eine besonders dichte Anordnung der beiden Unterflur-Radsatzdrehmaschinen. Die bewegliche Lagerung der Schienenstütze dient auch hier dem Zweck, die relativ zu den - ebenfalls beweglichen - Unterflur-Radsatzdrehmaschinen optimale Position einnehmen zu können und Kollisionen mit diesen zu vermeiden.

Auch in Bezug auf die zweite Schienenstütze ist erfindungsgemäß vorgesehen, dass die zweite Schienenstütze relativ zu der dritten Unterflur-Radsatzdrehmaschine und/oder relativ zu der vierten Unterflur-Radsatzdrehmaschine verschiebbar ist. Auch die Eigenschaften und Vorteile dieser Ausgestaltung wurden bereits zuvor im Zusammenhang mit der ersten Schienenstütze näher beschrieben. Auf die Verschiebbarkeit der ersten Schienenstütze kann ggf. verzichtet werden, wenn die Konfiguration des zu bearbeitenden Fahrzeugs dies zulässt. Die zweite Schienenstütze sollte aber unbedingt in Fahrtrichtung verschiebbar sein, da die dritte und die vierte Unterflur-Radsatzdrehmaschine oftmals über größere Strecken verschoben werden müssen. Dies liegt darin, dass die Drehgestellabstände zwischen unterschiedlichen Schienenfahrzeugen oftmals größere Unterschiede aufweisen als die Unterschiede zwischen den Radständen innerhalb der unterschiedlichen Drehgestelle.

Im Hinblick auf die zweite Schienenstütze kann alternativ vorgesehen sein, dass die zweite Schienenstütze mit der dritten Unterflur-Radsatzdrehmaschine oder mit der vierten Unterflur-Radsatzdrehmaschine mechanisch gekoppelt ist. Durch die mechanische Verbindung wird die Bewegung der zweiten Schienenstütze mit der Bewegung von einer der Unterflur-Radsatzdrehmaschinen verknüpft; eine unabhängige Bewegung ist daher nicht mehr möglich. Ein Vorteil der mechanischen Kopplung liegt darin, dass die Steuerung der Vorrichtung weniger komplex ausfällt, da die zweite Schienenstütze automatisch mit einer der benachbarten Unterflur-Radsatzdrehmaschinen mitbewegt wird.

Eine weitere Ausgestaltung der Vorrichtung ist schließlich gekennzeichnet durch eine Einrichtung zur Steuerung der Positionierung der Unterflur-Radsatzdrehmaschinen und/oder der Schienenstützen. Indem eine Einrichtung, insbesondere eine elektronische Einrichtung vorgesehen ist, kann eine automatische Steuerung der Unterflur-Radsatzdrehmaschinen und/oder der Schienenstützen erreicht werden. Hierbei können beispielsweise gespeicherte, fahrzeugspezifische Daten verwendet werden, so dass nach der Eingabe des Fahrzeugtyps eine automatische (Vor-) Positionierung der Unterflur-Radsatzdrehmaschinen und/oder der Schienenstützen erfolgt. Dies ist im Vergleich zu einer manuellen Positionierung schneller und weniger fehleranfällig.

Die zuvor beschriebene Aufgabe wird auch gelöst durch ein Verfahren nach Anspruch 8 zur Bearbeitung, insbesondere zur gleichzeitigen Bearbeitung mehrerer Radsätze eines Schienenfahrzeugs. Das Verfahren umfasst die folgenden Schritte: a) Bereitstellen von: einer ersten Unterflur-Radsatzdrehmaschine zum Reprofilieren von Rädern und Bremsscheiben von einem ersten Radsatz eines Schienenfahrzeugs, und einer zweiten Unterflur-Radsatzdrehmaschine zum Reprofilieren von Rädern und Bremsscheiben von einem zweiten Radsatz eines Schienenfahrzeugs, b) Bereitstellen von wenigstens zwei zu bearbeitenden Radsätzen eines Schienenfahrzeugs, c) Verstellen des Abstand zwischen der zweiten Unterflur-Radsatzdrehmaschine und der ersten Unterflur-Radsatzdrehmaschine, d) Absetzen und Einspannen der wenigstens zwei zu bearbeitenden Radsätze auf den ihnen zugeordneten Unterflur-Radsatzdrehmaschinen, und e) Bearbeiten der wenigstens zwei zu bearbeitenden Radsätze des Schienenfahrzeugs auf den ihnen zugeordneten Unterflur-Radsatzdrehmaschinen.

Durch die in Schritt c) vorgesehene Verstellung des Abstands zwischen den Unterflur-Radsatzdrehmaschinen in Fahrtrichtung kann eine Anpassung an unterschiedliche Schienenfahrzeuge erreicht werden. Auf diese Weise können mehrere Radsätze - unabhängig von ihren Abständen zueinander - gleichzeitig bearbeitet werden. Dies verkürzt die Bearbeitungszeit erheblich.

Das Verfahren ist dadurch gekennzeichnet, dass in Schritt a) zusätzlich eine dritte Unterflur-Radsatzdrehmaschine zum Reprofilieren von Rädern und Bremsscheiben von einem dritten Radsatz eines Schienenfahrzeugs und eine vierte Unterflur-Radsatzdrehmaschine zum Reprofilieren von Rädern und Bremsscheiben von einem vierten Radsatz eines Schienenfahrzeugs bereitgestellt wird, dass in Schritt b) vier zu bearbeitende Radsätze eines Schienenfahrzeugs bereitgestellt werden, dass in Schritt c) zusätzlich der Abstand zwischen der dritten Unterflur-Radsatzdrehmaschine und der ersten Unterflur-Radsatzdrehmaschine verstellt wird und dass der Abstand zwischen der vierten Unterflur-Radsatzdrehmaschine und der ersten Unterflur-Radsatzdrehmaschine verstellt wird, dass in Schritt d) vier zu bearbeitende Radsätze auf den ihnen zugeordneten Unterflur-Radsatzdrehmaschinen abgesetzt und eingespannt werden, und dass in Schritt e) zusätzlich der dritte Radsatz und/oder der vierte Radsatz des Schienenfahrzeugs auf den ihnen zugeordneten Unterflur-Radsatzdrehmaschinen bearbeitet wird. Durch diese Ausgestaltung des Verfahrens wird erreicht, dass nicht nur zwei, sondern bis zu vier Radsätze im eingebauten Zustand gleichzeitig bearbeitet werden können. Beispielsweise können jeweils zwei der vier Unterflur-Radsatzdrehmaschinen ein "Paar" bzw. "Tandem" bilden, das den beiden Radsätzen eines Drehgestells zugeordnet ist. Wenn zwei derartige Paare von Unterflur-Radsatzdrehmaschinen vorhanden sind, kann von einer "Doppel-Tandem"-Anordnung gesprochen werden.

Nach einer weiteren Ausgestaltung des Verfahrens ist vorgesehen, dass in Schritt a) eine Unterflur-Radsatzdrehmaschine nach einem der Patentansprüche 1 bis 7 bereitgestellt wird. Die zuvor beschriebene Unterflur-Radsatzdrehmaschine eignet sich aufgrund der genannten Eigenschaften und Vorteile in allen beschriebenen Ausgestaltungen besonderer Weise zur Durchführung des Verfahrens.

Das Verfahren sieht vor, dass der Schritt c) die folgenden Teilschritte umfasst: ca) Festlegen des Typs des Schienenfahrzeugs mit den zu bearbeitenden Radsätzen, und cb) Einstellen von gespeicherten, fahrzeugspezifischen Abständen zwischen der zweiten und/oder dritten und/oder vierten Unterflur-Radsatzdrehmaschine und der ersten Unterflur-Radsatzdrehmaschine. Durch Festlegung und Eingabe des nächsten zu bearbeitenden Fahrzeugtyps kann eine Voreinstellung bzw. Vorpositionierung der Unterflur-Radsatzdrehmaschinen erreicht werden. Die erste Unterflur-Radsatzdrehmaschine braucht ihre Position nicht ändern, da diese Unterflur-Radsatzdrehmaschine als Orientierungspunkt angesehen wird und das Schienenfahrzeug so weit vorfährt, dass der von der ersten Unterflur-Radsatzdrehmaschine zu bearbeitende Radsatz exakt über dieser Unterflur-Radsatzdrehmaschine angeordnet ist. Je nach Fahrzeugtyp müssen aber die anderen Unterflur-Radsatzdrehmaschinen ihre Position ändern, um die von ihnen zu bearbeitenden Radsätze erreichen zu können. Diese Positionsänderung erfolgt vorteilhafterweise durch gespeicherte, fahrzeugspezifische Vorgaben, die ggf. geringfügig korrigiert werden.

Diese Ausgestaltung des Verfahrens kann ergänzt werden durch den folgenden Schritt, der nach Schritt ca) und vor, gleichzeitig mit oder nach Schritt cb) durchgeführt wird: cc) Einstellen einer gespeicherten, fahrzeugspezifischen Position von wenigstens einer Schienenstütze. Durch diesen Schritt kann eine Voreinstellung bzw. Vorpositionierung der Schienenstütze erreicht werden. Dies kann vor, gleichzeitig mit oder nach der Voreinstellung bzw. Vorpositionierung der Unterflur-Radsatzdrehmaschinen erfolgen. Eine gleichzeitige Voreinstellung bzw. Vorpositionierung kann beispielsweise dadurch erreicht werden, dass die Schienenstütze mit einer der Unterflur-Radsatzdrehmaschinen mechanisch gekoppelt ist.

Nach einer weiteren Ausgestaltung des Verfahrens wird vorgeschlagen, dass der Schritt d) die folgenden Teilschritte umfasst: da) Absetzen und Einspannen des ersten zu bearbeitenden Radsatzes auf der ihm zugeordneten Unterflur-Radsatzdrehmaschine, db) Messen der tatsächlichen Abstände zwischen den zu bearbeitenden Radsätzen des Schienenfahrzeugs, dc) Anpassen der voreingestellten Abstände zwischen der zweiten und/oder dritten und/oder vierten Unterflur-Radsatzdrehmaschine und der ersten Unterflur-Radsatzdrehmaschine an die tatsächlich gemessenen Abstände zwischen den zu bearbeitenden Radsätzen des Schienenfahrzeugs, und dd) Absetzen und Einspannen des zweiten, dritten und vierten zu bearbeitenden Radsatzes auf den ihnen zugeordneten Unterflur-Radsatzdrehmaschinen. Diese Ausgestaltung betrifft das schrittweise Absetzen und Einspannen der Radsätze. Das Absetzen und Einspannen des ersten Radsatzes gestaltet sich eher unproblematisch, da dieser Radsatz als erstes abgesetzt und eingespannt wird, so dass noch keine Rücksicht auf die Position der anderen Radsätze genommen werden braucht. Vor dem Absetzen und Einspannen der weiteren Radsätze ist es jedoch sinnvoll zu überprüfen, ob die voreingestellten Positionen der ihnen zugeordneten Unterflur-Radsatzdrehmaschinen korrekt sind, oder ob diese Positionen geringfügig korrigiert und angepasst werden müssen. Hierzu wird eine Messung der tatsächlichen Abstände zwischen den zu bearbeitenden Radsätzen des Schienenfahrzeugs vorgeschlagen. Sollten die gemessenen Abstände von den voreingestellten Abständen abweichen, erfolgt eine Anpassung der voreingestellten Abstände an die tatsächlichen Verhältnisse, bevor die weiteren Radsätze abgesetzt und eingespannt werden können.

Das Verfahren kann schließlich ergänzt werden durch den folgenden Schritt, der vor Schritt d) durchgeführt wird: cz) Einfahren der Schiebeschienen. Nachdem die Reibrollen der Unterflur-Radsatzdrehmaschinen die Radsätze angehoben haben, können die Schiebeschienen eingefahren werden. Vorzugsweise sind die Schiebenschienen zweiteilig ausgeführt, so dass beide Teile unabhängig voneinander eingefahren und wieder ausgefahren werden können. Das Einfahren der Schiebeschienen wird auch als Auffahren - also Öffnen - der Schiebeschienen bezeichnet.

Die Erfindung wird nachfolgend anhand einer lediglich ein bevorzugtes Ausführungsbeispiel darstellenden Zeichnung näher erläutert. In der Zeichnung zeigen:
- Fig. 1:: eine aus dem Stand der Technik bekannte Unterflur-Radsatzdrehmaschine in einer Draufsicht,
- Fig. 2:: die Unterflur-Radsatzdrehmaschine aus Fig. 1 in einer geschnittenen Ansicht entlang der in Fig. 1 eingezeichneten Schnittebene II-II,
- Fig. 3:: eine erste Ausgestaltung und eine zweite Ausgestaltung eines aus dem Stand der Technik bekannten Schienenfahrzeugs in Seitenansicht,
- Fig. 4:: eine erfindungsgemäße Vorrichtung in einer Seitenansicht,
- Fig. 5:: die Vorrichtung aus Fig. 4 in einer Draufsicht,
- Fig. 6:: einen ersten Teilbereich der Vorrichtung aus Fig. 4 in einer vergrößerten Seitenansicht,
- Fig. 7:: den ersten Teilbereich aus Fig. 6 in einer Draufsicht,
- Fig. 8:: einen zweiten Teilbereich der Vorrichtung aus Fig. 4 in einer vergrößerten Seitenansicht,
- Fig. 9:: den zweiten Teilbereich aus Fig. 7 in einer Draufsicht, und
- Fig. 10:: den Ablauf eines erfindungsgemäßen Verfahrens in schematischer Darstellung.

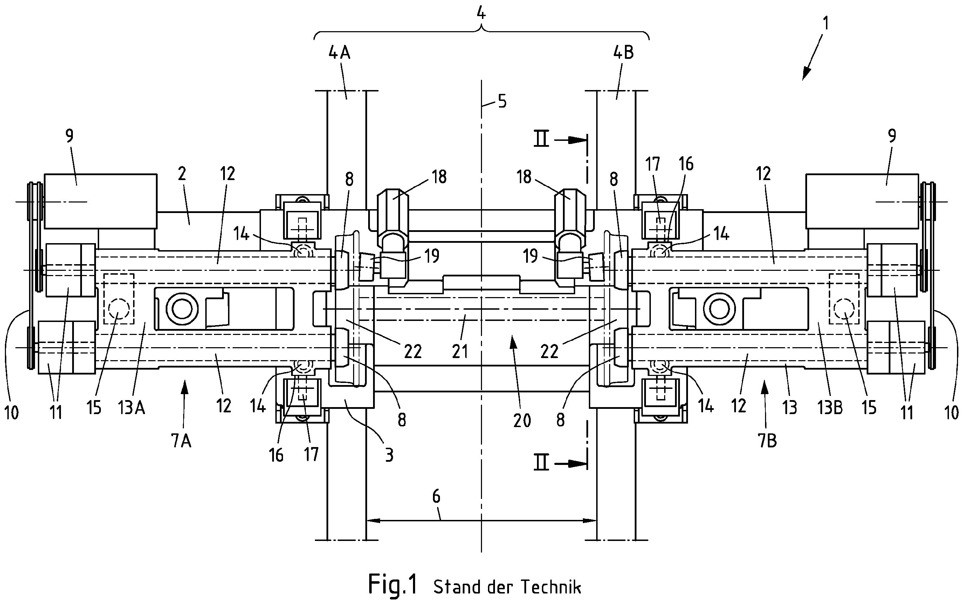

Fig. 1 zeigt eine aus dem Stand der Technik bekannte Unterflur-Radsatzdrehmaschine 1 in einer Draufsicht. Die gezeigte Unterflur-Radsatzdrehmaschine 1 weist einen Querbalken 2 auf, der auf einem (in Fig. 1 weitgehend verdeckten) Maschinenständer 3 gelagert ist. Der Maschinenständer 3 kann auf einen Werkstattboden gestellt werden und ist somit ortsfest und nicht verschiebbar. Weiterhin dargestellt ist ein Gleis 4 aus zwei Schienen 4A, 4B, die parallel zueinander verlaufen und eine Mittelachse 5 einschließen. Der Abstand zwischen den Innenkanten der beiden Schienen 4A, 4B wird als Spurweite 6 bezeichnet. Der Querbalken 2 verläuft etwa in einem rechten Winkel zu den beiden Schienen 4A, 4B und zu deren Mittelachse 5. Die Unterflur-Radsatzdrehmaschine 1 weist zwei Rollenträger 7A, 7B auf, die an gegenüberliegenden Enden des Maschinenständers 3 angeordnet sind. An jedem der beiden Rollenträger 7A, 7B sind zwei Reibrollen 8 drehbar gelagert. Die Reibrollen 8 werden über einen Reibrollenantrieb 9 angetrieben, der seine Antriebsleistung über einen Riementrieb 10, zwei Getriebe 11 und zwei Wellen 12 auf die beiden Reibrollen 8 überträgt. Anstelle des Riementriebs 10 könnten auch andere Mittel zur Lastübertragung eingesetzt werden. Die Rollenträger 7A, 7B weisen jeweils ein Gehäuse 13A, 13B auf, in denen die Wellen 12 drehbar gelagert sind.

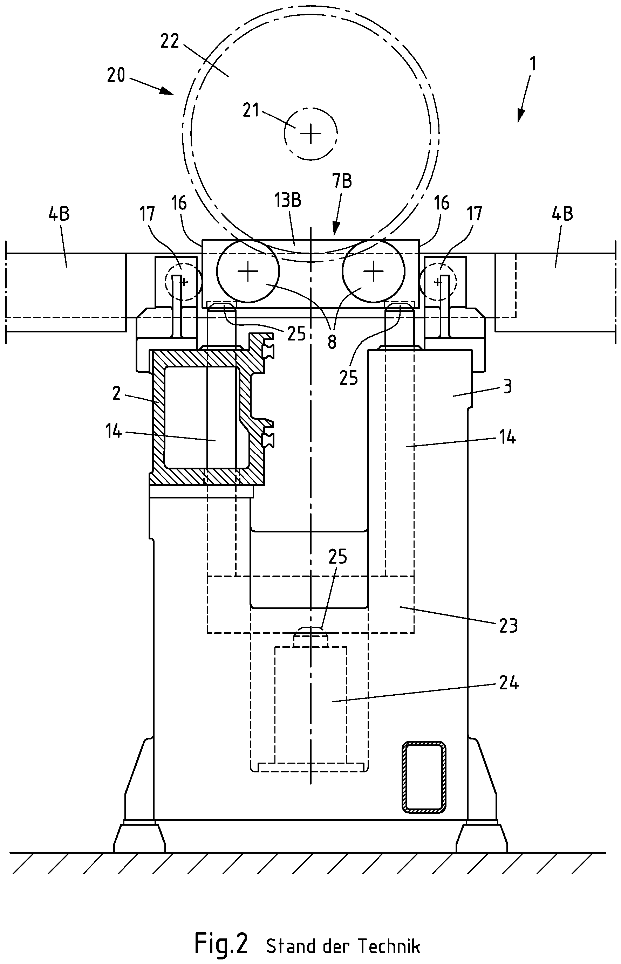

Die beiden Rollenträger 7A, 7B sind in vertikaler Richtung an drei Stellen abgestützt, nämlich jeweils auf zwei vertikalen Stangen 14 (innen) sowie auf einer Halterung 15 (außen). Alternativ hierzu sind auch andere Ausführungen der Rollenträger 7A, 7B möglich. Die beiden Rollenträger 7A, 7B weisen zudem jeweils zwei Führungsflächen 16 auf, die an Rollen 17 abrollen können, welche an dem Querträger 2 oder an dem Maschinenständer 3 vorgesehen sind. Die Lagerung der Rollenträger 7A, 7B wird im Zusammenhang mit Fig. 2 näher erläutert. Die in Fig. 1 gezeigte Unterflur-Radsatzdrehmaschine 1 weist zudem zwei Halter 18 auf, an denen jeweils eine Axialführungsrolle 19 drehbar gelagert ist. Auf der in Fig. 1 gezeigten Unterflur-Radsatzdrehmaschine 1 kann ein Radsatz 20 bearbeitet werden, der im beispielhaft dargestellten Fall eine Radsatzwelle 21 und zwei Radscheiben 22 umfasst. Der Radsatz 20 kann zudem Bremsscheiben umfassen, die aus Gründen der besseren Übersichtlichkeit in Fig. 1 nicht dargestellt sind.

In Fig. 2 ist die Unterflur-Radsatzdrehmaschine 1 aus Fig. 1 in einer geschnittenen Ansicht entlang der in Fig. 1 eingezeichneten Schnittebene II-II dargestellt. Diejenigen Bereiche der Unterflur-Radsatzdrehmaschine 1, die bereits im Zusammenhang mit Fig. 1 beschrieben wurden, sind in Fig. 2 - und in allen weiteren Figuren - mit entsprechenden Bezugszeichen versehen. In der geschnittenen Ansicht ist der etwa rechteckige Querschnitt des Querbalkens 2 gut erkennbar. Zudem wird in der in Fig. 2 gewählten Ansicht deutlich, dass die Radscheiben 22 des Radsatzes 20 durch die beiden Reibrollen 8 gestützt werden und durch die Drehung der Reibrollen 8 auch eine Drehung der Radscheiben 22 erfolgt. Deutlich erkennbar ist auch die Lagerung des Gehäuses 13B des Rollenträgers 7B auf den beiden vertikalen Stangen 14. Die beiden vertikalen Stangen 14 sind in ihrem unteren Bereich durch eine Gabel 23 miteinander verbunden. Die Gabel 23 kann durch einen mit dem Maschinenständer 3 verbundenen Hubzylinder 24 in vertikaler Richtung verschoben werden, also angehoben und abgesenkt werden. Durch diese Vertikalbewegung werden auch der Rollenträger 7B und die daran gelagerten Reibrollen 8 in vertikaler Richtung verschoben, was eine Anpassung der Unterflur-Radsatzdrehmaschine 1 an Radscheiben 22 mit unterschiedlichen Durchmessern erlaubt. Die Verbindung zwischen dem Gehäuse 13B des Rollenträgers 7B und den vertikalen Stangen 14 erfolgt ebenso wie die Verbindung zwischen Gabel 23 und Hubzylinder 24 über geeignete Gelenke 25. Erkennbar ist zudem das Prinzip der Positionierung des Rollenträgers 7B in Richtung der Schiene 4B: Der Rollenträger 7B weist zwei Führungsflächen 16 auf, die an Rollen 17 abrollen können, die an dem Querträger 2 oder dem Maschinenständer 3 vorgesehen sind. Um den Radsatz 20 auf die Reibrollen 8 zu setzen, ist die Schiene 4B (ebenso wie die nicht dargestellte Schiene 4A) im Bereich der Reibrollen 8 unterbrochen 5 und kann dort teleskopartig ein- und ausgefahren werden.

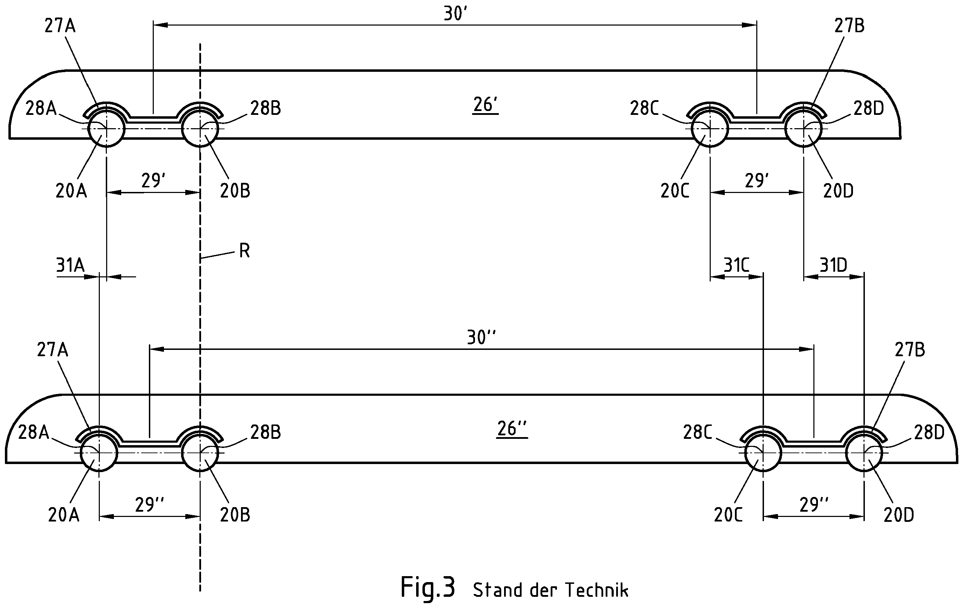

Fig. 3 zeigt eine erste Ausgestaltung und eine zweite Ausgestaltung eines aus dem Stand der Technik bekannten Schienenfahrzeugs 26 in Seitenansicht. Die erste Ausgestaltung des Schienenfahrzeugs 26' ist in Fig. 3 oben dargestellt und die zweite Ausgestaltung des Schienenfahrzeugs 26" ist in Fig. 3 unten dargestellt. Beide Schienenfahrzeuge 26', 26" weisen jeweils zwei Drehgestelle 27A, 27B auf, in deren Rahmen jeweils zwei Radsätze 20A, 20B, 20C, 20D drehbar gelagert sind. Jeder Radsatz 20A, 20B, 20C, 20D weist eine zentral angeordnete Drehachse 28A, 28B, 28C, 28D auf. Die beiden Radsätze 20 jedes Drehgestells 27 weisen in Längsrichtung (also in Fahrtrichtung) des Schienenfahrzeugs 26 einen Abstand zueinander auf, der als Radstand 29 bezeichnet wird. Zudem weisen beide Drehgestelle 27 des Schienenfahrzeugs 26 in Längsrichtung einen Abstand zueinander auf, der als Drehgestellabstand 30 bezeichnet wird. Die erste Ausgestaltung des Schienenfahrzeugs 26' und die zweite Ausgestaltung des Schienenfahrzeugs 26" weisen unterschiedlich große Radstände 29', 29" und Drehgestellabstände 30', 30" auf. Um die Unterschiede zu verdeutlichen, ist in Fig. 3 eine Referenzebene R dargestellt, die durch die Drehachsen 28B der beiden - jeweils von links gesehen - zweiten Radsätze 20B verläuft. Alternativ hierzu könnte die Referenzebene R auch durch die Drehachse eines anderen Radsatzes verlaufen. Im linken Bereich von Fig. 3 ist erkennbar, dass der Radstand 29" des unteren Schienenfahrzeugs 26" etwas größer ist als der Radstand 29' des oberen Schienenfahrzeugs 26'; an den beiden ersten Radsätzen 20A besteht also eine Längendifferenz 31A. Da auch der

Drehgestellabstand 30" des unteren Schienenfahrzeugs 26" größer ist als der Drehgestellabstand 30' des oberen Schienenfahrzeugs 26', besteht auch an den beiden dritten Radsätzen 20C eine Längendifferenz 31C; ebenso besteht an den beiden vierten Radsätzen 20D eine Längendifferenz 31D, die der Summe der Längendifferenz 31A und der Längendifferenz 31C entspricht. Die Drehgestellabstände 30', 30" betragen meist mehr als 10 m; sie können beispielsweise im Bereich zwischen 16,0 m und 20,0 m liegen. Die Radstände 29', 29" sind hingegen meist wesentlich kleiner als 5 m; sie können beispielsweise im Bereich zwischen 1,5 m und 3,5 m liegen.

Die unterschiedlichen Dimensionen der beiden in Fig. 3 gezeigten Schienenfahrzeuge 26', 26" führen dazu, dass die Bearbeitung von Radsätzen 20A, 20B, 20C, 20D bei einem Wechsel des Fahrzeugtyps (z.B. von 26' zu 26") erschwert wird. Insbesondere nehmen die Radsätze 20A, 20B, 20C, 20D aufgrund der Längendifferenzen 31A, 31C, 31D je nach Fahrzeugtyp unterschiedliche Positionen ein, so dass auch die zur Bearbeitung der entsprechenden Radsätze 20A, 20B, 20C, 20D verwendeten Werkzeuge entsprechend positioniert werden müssen. Hinzu kommen insbesondere bei größeren Längen - beispielsweise bei den Drehgestellabständen 30', 30" - geringfügige thermisch bedingte Längenänderungen im Bereich weniger Millimeter, die ebenfalls auszugleichen sind, um ein präzises Bearbeitungsergebnis sicherzustellen. Dies leistet die nachfolgend beschriebene Vorrichtung sowie das nachfolgend beschriebene Verfahren.

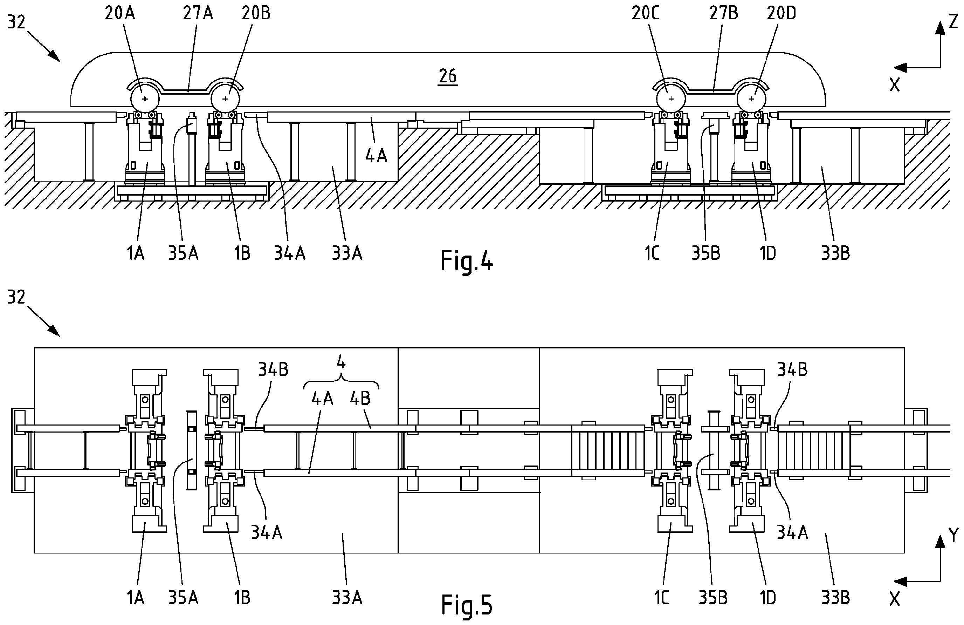

In Fig. 4 ist eine erfindungsgemäße Vorrichtung 32 in einer Seitenansicht dargestellt. Fig. 5 zeigt die Vorrichtung 32 aus Fig. 4 in einer Draufsicht. Die in Fig. 4 und in Fig. 5 dargestellte Vorrichtung 32 dient der Bearbeitung mehrerer Radsätze 20 eines Schienenfahrzeugs 26. Insbesondere dient die dargestellte Vorrichtung 32 dazu, mehrere - insbesondere alle - Radsätze 20 desselben Schienenfahrzeugs 26 gleichzeitig zu bearbeiten. Bei dem Schienenfahrzeug 26 kann es sich beispielsweise um eines der beiden zuvor im Zusammenhang mit Fig. 3 beschriebenen Schienenfahrzeuge 26', 26" handeln. Die in Fig. 4 dargestellte und insoweit bevorzugte Vorrichtung 32 umfasst insgesamt vier Unterflur-Radsatzdrehmaschinen 1A, 1B, 1C, 1D zum Reprofilieren von Rädern und Bremsscheiben der vier Radsätze 20A, 20B, 20C, 20D des Schienenfahrzeugs 26. Jedem der vier zu bearbeitenden Radsätze 20A, 20B, 20C, 20D ist daher eine eigene Unterflur-Radsatzdrehmaschine 1A, 1B, 1C, 1D zugeordnet. Bei den Unterflur-Radsatzdrehmaschinen 1A, 1B, 1C, 1D handelt es sich beispielsweise um die bereits zuvor im Zusammenhang mit Fig. 1 und Fig. 2 beschriebene Unterflur-Radsatzdrehmaschine 1.

Die beiden links in Fig. 4 und Fig. 5 dargestellten Unterflur-Radsatzdrehmaschinen 1A, 1B sind in einer ersten Grube 33A angeordnet und dienen der Bearbeitung der beiden in dem ersten Drehgestell 27A gelagerten Radsätze 20A, 20B. Die beiden rechts dargestellten Unterflur-Radsatzdrehmaschinen 1C, 1D sind in einer zweiten Grube 33B angeordnet und dienen der Bearbeitung der beiden in dem zweiten Drehgestell 27B gelagerten Radsätze 20C, 20D. Es können also alle vier Radsätze 20A, 20B, 20C, 20D gleichzeitig von der Vorrichtung 32 bearbeitet werden. Die Anordnung der vier Unterflur-Radsatzdrehmaschinen 1A-1D in zwei Gruben 33A, 33B dient dem Zweck, dass die Unterflur-Radsatzdrehmaschinen 1A-1D unterhalb der Höhe eines auf dem Untergrund verlegten Gleises 4 mit zwei Schienen 4A, 4B angeordnet sind. Die beiden Schienen 4A, 4B sind im Bereich der beiden in der ersten Grube 33A angeordneten Unterflur-Radsatzdrehmaschinen 1A, 1B ebenso wie im Bereich der beiden in der zweiten Grube 33B angeordneten Unterflur-Radsatzdrehmaschinen 1C, 1D unterbrochen und werden dort durch bewegliche Schiebeschienen 34A, 34B ersetzt. Die beiden Schiebeschienen 34A, 34B können ausgefahren werden (beim Ein- und Ausfahren des Schienenfahrzeugs 26) und eingefahren werden (bei der Bearbeitung der Radsätze 20A-20D). Zur Abstützung der beiden Schiebenschienen 34A, 34B ist sowohl zwischen den beiden in der ersten Grube 33A angeordneten Unterflur-Radsatzdrehmaschinen 1A, 1B als auch zwischen den beiden in der zweiten Grube 33B angeordneten Unterflur-Radsatzdrehmaschinen 1C, 1D jeweils eine Schienenstütze 35A, 35B vorgesehen. Bei der in Fig. 4 und Fig. 5 dargestellten Vorrichtung 32 sind die Schiebeschienen 34A, 34B zweiteilig ausgeführt, sie können also in gegenüberliegende Richtungen ein- und ausgefahren werden und "treffen" sich im ausgefahrenen Zustand auf den Schienenstützen 35A, 35B. Alternativ hierzu wären auch einteilige Schiebeschienen möglich. Um die Positionen der vier Unterflur-Radsatzdrehmaschinen 1A-1D an unterschiedliche Schienenfahrzeuge 26 anpassen zu können, sind einige oder alle Unterflur-Radsatzdrehmaschinen 1A-1D in Fahrtrichtung X (also in Längsrichtung des Schienenfahrzeugs 26 bzw. in Längsrichtung des Gleises 4) verschiebbar. Auf diese Eigenschaft der Vorrichtung 32 wird nachfolgend detaillierter eingegangen.

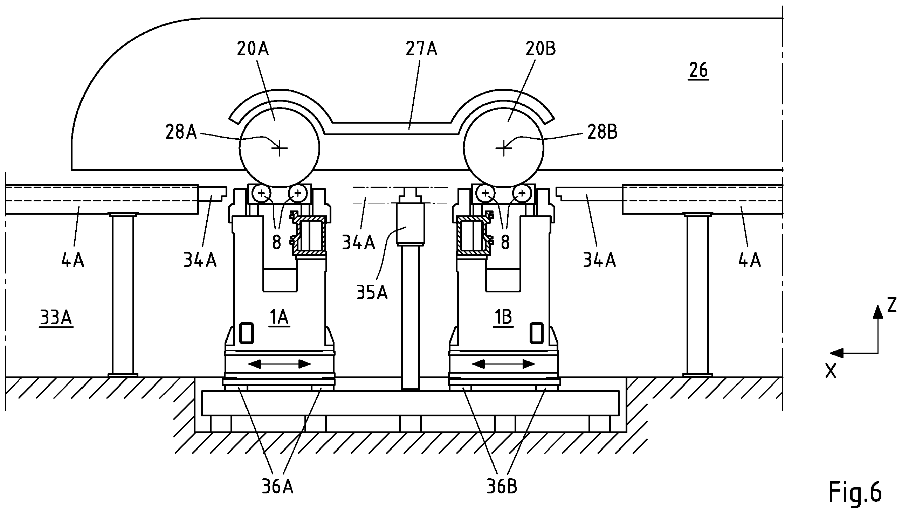

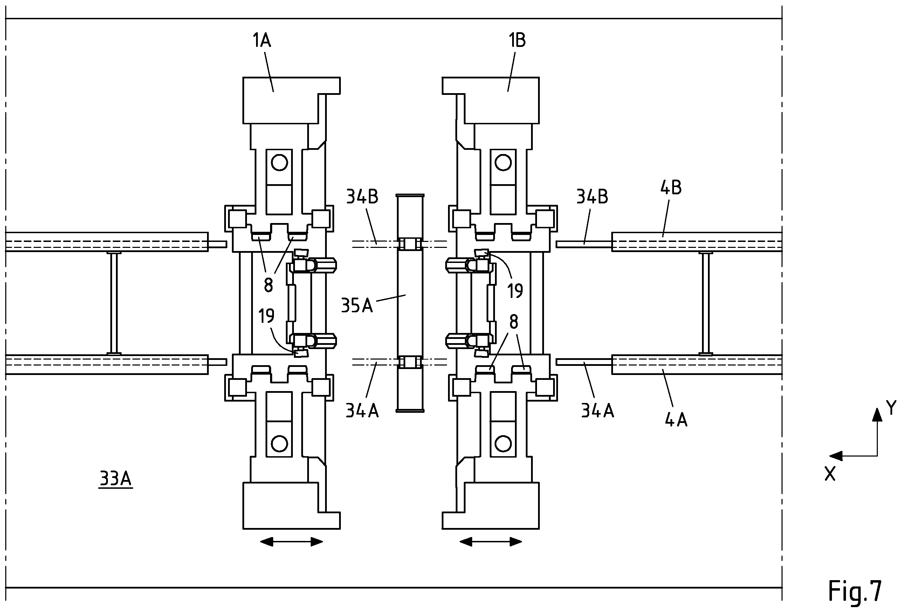

Fig. 6 zeigt einen ersten Teilbereich der Vorrichtung 32 aus Fig. 4 in einer vergrößerten Seitenansicht. In Fig. 7 ist der erste Teilbereich aus Fig. 6 in einer Draufsicht dargestellt. Bei dem dargestellten Teilbereich handelt es sich um den in Fig. 4 links gezeigten Bereich. Diejenigen Bereiche der Vorrichtung 32, die bereits im Zusammenhang mit der Vorrichtung 32 aus Fig. 4 und Fig. 5 beschrieben wurden, sind in Fig. 6 und in Fig. 7 mit entsprechenden Bezugszeichen versehen. In Fig. 6 und in Fig. 7 ist erkennbar, dass die Vorrichtung 32 in der Arbeitsposition dargestellt ist. Dies ist daran erkennbar, dass die zweiteilig ausgeführten Schiebeschienen 34A, 34B eingefahren sind, so dass die Radscheiben 22 der beiden Radsätze 20A, 20B nicht mehr auf den Schiebeschienen 34A, 34B, sondern auf den Reibrollen 8 der jeweiligen Unterflur-Radsatzdrehmaschine 1A, 1B abgestützt sind. Um die Radsätze 20A, 20B von Schienenfahrzeugen 26 mit unterschiedlichen Radständen 29 bearbeiten zu können, ist bei der Vorrichtung 32 vorgesehen, dass der Abstand in Fahrtrichtung (X-Koordinate des dargestellten Koordinatensystems) zwischen der zweiten Unterflur-Radsatzdrehmaschine 1B und der ersten Unterflur-Radsatzdrehmaschine 1A verstellbar ist. Dies kann beispielsweise dadurch erreicht werden, dass die erste Unterflur-Radsatzdrehmaschine 1A und/oder die zweite Unterflur-Radsatzdrehmaschine 1B eine Lagerung 36A, 36B aufweist, die eine Verschiebung der Unterflur-Radsatzdrehmaschine 1A, 1B in Fahrtrichtung (X-Koordinate des dargestellten Koordinatensystems) erlaubt (durch Doppelpfeile dargestellt). Die in Fig. 6 und in Fig. 7 dargestellte Schienenstütze 35A ist hingegen nicht verschiebbar und somit ortsfest angeordnet.

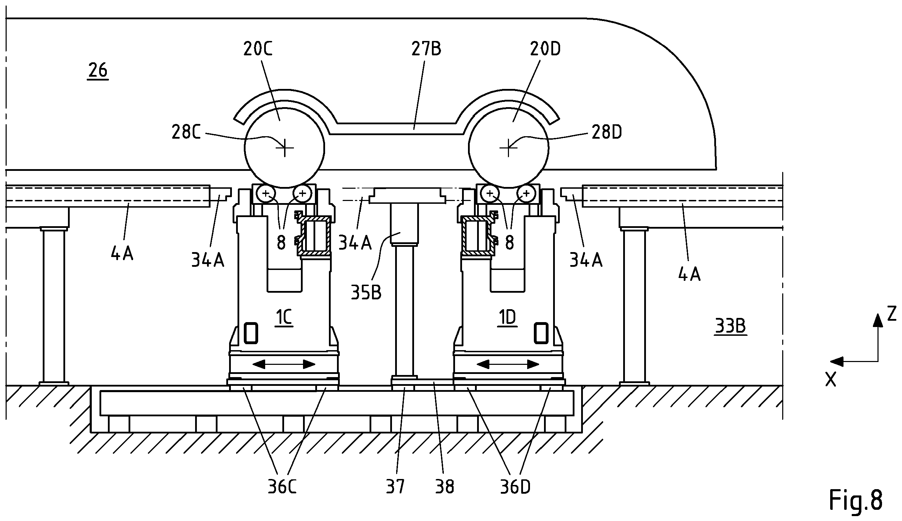

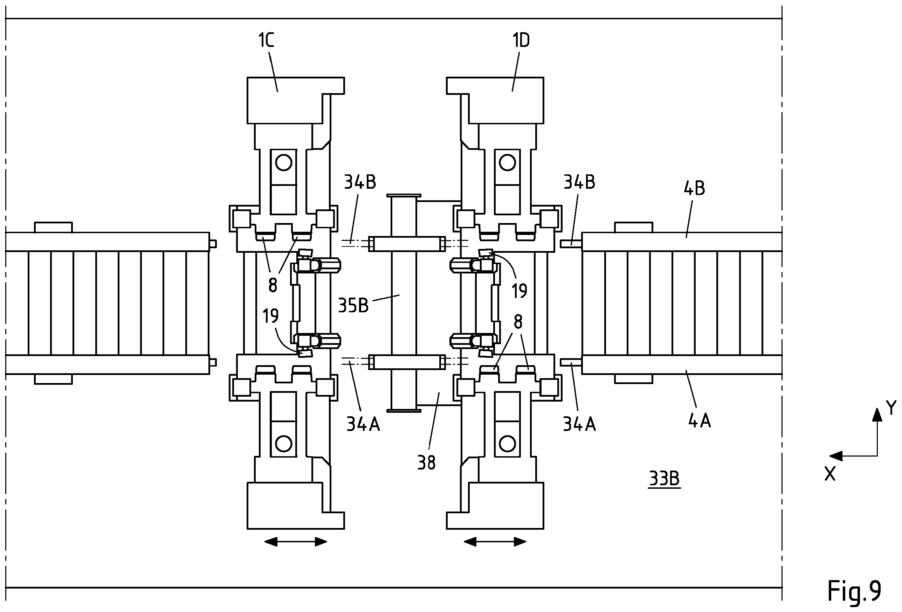

Fig. 8 zeigt einen zweiten Teilbereich der Vorrichtung 32 aus Fig. 4 in einer vergrößerten Seitenansicht. In Fig. 9 ist der zweite Teilbereich aus Fig. 7 in einer Draufsicht dargestellt. Bei dem dargestellten Teilbereich handelt es sich um den in Fig. 4 rechts gezeigten Bereich. Diejenigen Bereiche der Vorrichtung 32, die bereits im Zusammenhang mit der Vorrichtung 32 aus Fig. 4 bis Fig. 7 beschrieben wurden, sind in Fig. 8 und in Fig. 9 mit entsprechenden Bezugszeichen versehen. In Fig. 8 und in Fig. 9 ist erkennbar, dass die Vorrichtung 32 in der Arbeitsposition dargestellt ist. Dies ist daran erkennbar, dass die zweiteilig ausgeführten Schiebeschienen 34A, 34B eingefahren sind, so dass die Radscheiben 22 der beiden Radsätze 20C, 20D nicht mehr auf den Schiebeschienen 34A, 34B, sondern auf den Reibrollen 8 der jeweiligen Unterflur-Radsatzdrehmaschine 1C, 1D abgestützt sind. Um die Radsätze 20C, 20D von Schienenfahrzeugen 26 mit unterschiedlichen Radständen 29 bearbeiten zu können, ist bei der Vorrichtung 32 vorgesehen, dass der Abstand in Fahrtrichtung (X-Koordinate des dargestellten Koordinatensystems) zwischen der vierten Unterflur-Radsatzdrehmaschine 1D und der dritten Unterflur-Radsatzdrehmaschine 1C verstellbar ist. Dies kann beispielsweise dadurch erreicht werden, dass die dritte Unterflur-Radsatzdrehmaschine 1C und/oder die vierte Unterflur-Radsatzdrehmaschine 1D eine Lagerung 36C, 36D aufweist, die eine Verschiebung der Unterflur-Radsatzdrehmaschine 1C, 1D in Fahrtrichtung (X-Koordinate des dargestellten Koordinatensystems) erlaubt (durch Doppelpfeile dargestellt). Die in Fig. 7 und in Fig. 8 dargestellte Schienenstütze 35B weist ebenfalls eine Lagerung 37 auf; sie ist zudem mit der vierten Unterflur-Radsatzdrehmaschine 1D über ein Koppelelement 38 mechanisch gekoppelt. Eine Verschiebung der vierten Unterflur-Radsatzdrehmaschine 1D hat daher eine entsprechende Verschiebung der Schienenstütze 35B zur Folge. Alternativ hierzu kann die Schienenstütze 35B auch von der vierten Unterflur-Radsatzdrehmaschine 1D (und allen anderen Unterflur-Radsatzdrehmaschinen) entkoppelt sein, so dass die Schienenstütze 35B unabhängig von den Unterflur-Radsatzdrehmaschinen 1A-1D in Fahrtrichtung (X-Koordinate des dargestellten Koordinatensystems)verschoben werden kann.

Bei der in Fig. 4 bis Fig. 9 dargestellten Vorrichtung 32 sind alle vier Unterflur-Radsatzdrehmaschine 1A-1D auf Lagerungen 36A, 36B, 35C, 36D in Fahrtrichtung X verschiebbar gelagert sind. Zur Verwirklichung der erfindungsgemäßen Idee könnte auch eine der vier Unterflur-Radsatzdrehmaschine 1A unbeweglich gelagert sein, sofern die anderen (hier: drei) Unterflur-Radsatzdrehmaschine 1B, 1C, 1D in Fahrtrichtung X verschiebbar gelagert sind und sich relativ zu der unbeweglich gelagerten Unterflur-Radsatzdrehmaschine 1A bewegen können. Welche der vier Unterflur-Radsatzdrehmaschinen 1A, 1B, 1C, 1D unbeweglich gelagert ist, ist unerheblich, sofern allen anderen Unterflur-Radsatzdrehmaschinen 1A, 1B, 1C, 1D verschiebbar bzw. beweglich gelagert sind.

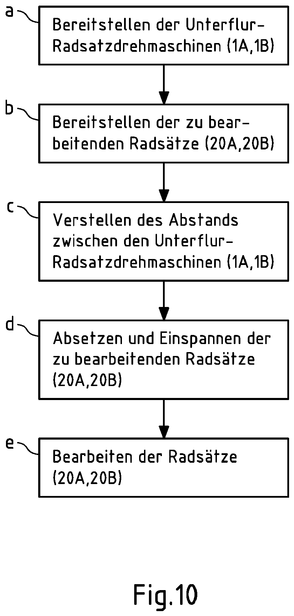

In Fig. 10 ist schließlich der Ablauf eines erfindungsgemäßen Verfahrens in schematischer Darstellung gezeigt. Das Verfahren umfasst die folgenden Schritte: a) Bereitstellen von: einer ersten Unterflur-Radsatzdrehmaschine zum Reprofilieren von Rädern und Bremsscheiben von einem ersten Radsatz eines Schienenfahrzeugs, und einer zweiten Unterflur-Radsatzdrehmaschine zum Reprofilieren von Rädern und Bremsscheiben von einem zweiten Radsatz eines Schienenfahrzeugs, b) Bereitstellen von wenigstens zwei zu bearbeitenden Radsätzen eines Schienenfahrzeugs, c) Verstellen des Abstand zwischen der zweiten Unterflur-Radsatzdrehmaschine und der ersten Unterflur-Radsatzdrehmaschine, d) Absetzen und Einspannen der wenigstens zwei zu bearbeitenden Radsätze auf den ihnen zugeordneten Unterflur-Radsatzdrehmaschinen, und e) Bearbeiten der wenigstens zwei zu bearbeitenden Radsätze des Schienenfahrzeugs auf den ihnen zugeordneten Unterflur-Radsatzdrehmaschinen.

### Bezugszeichenliste:

- 1, 1A, 1B, 1C, 1D:: Unterflur-Radsatzdrehmaschine
- 2:: Querbalken
- 3:: Maschinenständer
- 4:: Gleis
- 4A, 4B:: Schiene
- 5:: Mittelachse
- 6:: Spurweite
- 7A, 7B:: Rollenträger
- 8:: Reibrolle
- 9:: Reibrollenantrieb
- 10:: Riementrieb
- 11:: Getriebe
- 12:: Welle
- 13A, 13B:: Gehäuse (des Rollenträgers 7A, 7B)
- 14:: vertikale Stange
- 15:: Halterung
- 16:: Führungsfläche
- 17:: Rolle
- 18:: Halter
- 19:: Axialführungsrolle
- 20, 20A, 20B, 20C, 20D:: Radsatz
- 21:: Radsatzwelle
- 22:: Radscheibe
- 23:: Gabel
- 24:: Hubzylinder
- 25:: Gelenk
- 26, 26', 26":: Schienenfahrzeug
- 27A, 27B:: Drehgestell
- 28A, 28B, 28C, 28D:: Drehachse (eines Radsatzes 20)
- 29, 29', 29":: Radstand
- 30, 30', 30":: Drehgestellabstand
- 31A, 31C, 31D:: Radstanddifferenz
- 32:: Vorrichtung (zur Bearbeitung mehrerer Radsätze)
- 33A, 33B:: Grube
- 34A, 34B:: Schiebeschiene
- 35A, 35B:: Schienenstütze
- 36A, 36B:: Lagerung (der Unterflur-Radsatzdrehmaschine)
- 37:: Lagerung (der Schienenstütze)
- 38:: Koppelelement

- R:: Referenzebene
- X:: Längsrichtung / Fahrtrichtung
- Y:: Querrichtung
- Z:: Hochrichtung

## Patentansprüche

1. Vorrichtung (32) zur Bearbeitung, insbesondere zur gleichzeitigen Bearbeitung mehrerer Radsätze (20A, 20B) eines Schienenfahrzeugs (26), umfassend:
- eine erste Unterflur-Radsatzdrehmaschine (1A) zum Reprofilieren von Rädern und Bremsscheiben von einem ersten Radsatz (20A) eines Schienenfahrzeugs (26),
- eine zweite Unterflur-Radsatzdrehmaschine (1B) zum Reprofilieren von Rädern und Bremsscheiben von einem zweiten Radsatz (20B) eines Schienenfahrzeugs (26),
- eine dritte Unterflur-Radsatzdrehmaschine (1C) zum Reprofilieren von Rädern und Bremsscheiben von einem dritten Radsatz (20C) eines Schienenfahrzeugs (26), und
- eine vierte Unterflur-Radsatzdrehmaschine (1D) zum Reprofilieren von Rädern und Bremsscheiben von einem vierten Radsatz (20D) eines Schienenfahrzeugs (26),
- wobei eine zweite Schienenstütze (35B) zwischen der dritten Unterflur-Radsatzdrehmaschine (1C) und der vierten Unterflur-Radsatzdrehmaschine (1D) angeordnet ist,
- wobei der Abstand zwischen der zweiten Unterflur-Radsatzdrehmaschine (1B) und der ersten Unterflur-Radsatzdrehmaschine (1A) verstellbar ist, und
- wobei der Abstand zwischen der dritten Unterflur-Radsatzdrehmaschine (1C) und der ersten Unterflur-Radsatzdrehmaschine (1A) verstellbar ist und/oder
- wobei der Abstand zwischen der vierten Unterflur-Radsatzdrehmaschine (1D) und der ersten Unterflur-Radsatzdrehmaschine (1A) verstellbar ist,
**dadurch gekennzeichnet, dass**
die zweite Schienenstütze (35B) relativ zu der dritten Unterflur-Radsatzdrehmaschine (1C) und/oder relativ zu der vierten Unterflur-Radsatzdrehmaschine (1D) verschiebbar ist.

2. Vorrichtung (32) nach Anspruch 1,
**dadurch gekennzeichnet, dass**
die erste Unterflur-Radsatzdrehmaschine (1A) und/oder die zweite Unterflur-Radsatzdrehmaschine (1B) und/oder die dritte Unterflur-Radsatzdrehmaschine (1C) und/oder die vierte Unterflur-Radsatzdrehmaschine (1D) Folgendes umfasst:
- einen Maschinenständer (3),
- einen Querbalken (2) zur Überbrückung eines Werkstattgleises (4) mit zwei Schienen (4A, 4B) in Querrichtung,
- zwei Rollenträger (7A, 7B),
- vier Reibrollen (8),
- wenigstens einen Reibrollenantrieb (9) zum Antreiben der Reibrollen (8), und
- wenigstens eine Axialführungsrolle (19) zur axialen Führung des Radsatzes (20),
- wobei der Querbalken (2) auf dem Maschinenständer (3) gelagert ist,
- wobei die Rollenträger (7A, 7B) beweglich mit dem Maschinenständer (3) verbunden sind, und
- wobei die Reibrollen (8) drehbar an dem Rollenträger (7A, 7B) gelagert sind.

3. Vorrichtung (32) nach Anspruch 1 oder 2,
**dadurch gekennzeichnet, dass**
die erste Unterflur-Radsatzdrehmaschine (1A) und die zweite Unterflur-Radsatzdrehmaschine (1B) in entgegengesetzter Richtung angeordnet sind und/oder dass eine erste Schienenstütze (35A) zwischen diesen beiden Unterflur-Radsatzdrehmaschinen (1A, 1B) angeordnet ist.

4. Vorrichtung (32) nach Anspruch 3,
**dadurch gekennzeichnet, dass**
die erste Schienenstütze (35A) relativ zu der ersten Unterflur-Radsatzdrehmaschine (1A) und/oder relativ zu der zweiten Unterflur-Radsatzdrehmaschine (1B) verschiebbar ist.

5. Vorrichtung (32) nach einem der Ansprüche 1 bis 3,
**dadurch gekennzeichnet, dass**
die dritte Unterflur-Radsatzdrehmaschine (1C) und die vierte Unterflur-Radsatzdrehmaschine (1D) in entgegengesetzter Richtung angeordnet sind.

6. Vorrichtung (32) nach Anspruch 1,
**dadurch gekennzeichnet, dass**
die zweite Schienenstütze (35B) mit der dritten Unterflur-Radsatzdrehmaschine (1C) oder mit der vierten Unterflur-Radsatzdrehmaschine (1D) mechanisch gekoppelt ist.

7. Vorrichtung (32) nach einem der Ansprüche 1 bis 6,
**gekennzeichnet durch**
eine Einrichtung zur Steuerung der Positionierung der Unterflur-Radsatzdrehmaschinen (1A-1D) und/oder der Schienenstützen (35A, 35B).

8. Verfahren zur Bearbeitung, insbesondere zur gleichzeitigen Bearbeitung mehrerer Radsätze (20A, 20B) eines Schienenfahrzeugs (26), umfassend die folgenden Schritte:
a) Bereitstellen von:
- einer ersten Unterflur-Radsatzdrehmaschine (1A) zum Reprofilieren von Rädern und Bremsscheiben von einem ersten Radsatz (20A) eines Schienenfahrzeugs (26), und
- einer zweiten Unterflur-Radsatzdrehmaschine (1B) zum Reprofilieren von Rädern und Bremsscheiben von einem zweiten Radsatz (20B) eines Schienenfahrzeugs (26),
b) Bereitstellen von wenigstens zwei zu bearbeitenden Radsätzen (20A, 20B) eines Schienenfahrzeugs (26),
c) Verstellen des Abstand zwischen der zweiten Unterflur-Radsatzdrehmaschine (1B) und der ersten Unterflur-Radsatzdrehmaschine (1A),
d) Absetzen und Einspannen der wenigstens zwei zu bearbeitenden Radsätze (20A, 20B) auf den ihnen zugeordneten Unterflur-Radsatzdrehmaschinen (1A, 1B), und
e) Bearbeiten der wenigstens zwei zu bearbeitenden Radsätze (20A, 20B) des Schienenfahrzeugs (26) auf den ihnen zugeordneten Unterflur-Radsatzdrehmaschinen (1A, 1B), wobei
- in Schritt a) zusätzlich eine dritte Unterflur-Radsatzdrehmaschine (1C) zum Reprofilieren von Rädern und Bremsscheiben von einem dritten Radsatz (20C) eines Schienenfahrzeugs (26) und eine vierte Unterflur-Radsatzdrehmaschine (1D) zum Reprofilieren von Rädern und Bremsscheiben von einem vierten Radsatz (20D) eines Schienenfahrzeugs (26) bereitgestellt wird,
- in Schritt b) vier zu bearbeitende Radsätze (20A, 20B, 20C, 20D) eines Schienenfahrzeugs (26) bereitgestellt werden,
- in Schritt c) zusätzlich der Abstand zwischen der dritten Unterflur-Radsatzdrehmaschine (1C) und der ersten Unterflur-Radsatzdrehmaschine (1A) verstellt wird und wobei der Abstand zwischen der vierten Unterflur-Radsatzdrehmaschine (1D) und der ersten Unterflur-Radsatzdrehmaschine (1A) verstellt wird,
- in Schritt d) vier zu bearbeitende Radsätze (20A, 20B, 20C, 20D) auf den ihnen zugeordneten Unterflur-Radsatzdrehmaschinen (1A, 1B, 1C, 1D) abgesetzt und eingespannt werden,
- in Schritt e) zusätzlich der dritte Radsatz (20C) und/oder der vierte Radsatz (20D) des Schienenfahrzeugs (26) auf den ihnen zugeordneten Unterflur-Radsatzdrehmaschinen (1C, 1D) bearbeitet wird, und
- wobei in Schritt a) eine zweite Schienenstütze (35B) zwischen der dritten Unterflur-Radsatzdrehmaschine (1C) und der vierten Unterflur-Radsatzdrehmaschine (1D) bereit gestellt wird,
**dadurch gekennzeichnet, dass**
der Schritt c) die folgenden Teilschritte umfasst:
ca) Festlegen des Typs des Schienenfahrzeugs (26) mit den zu bearbeitenden Radsätzen (20A, 20B, 20C, 20D), und
cb) Einstellen von gespeicherten, fahrzeugspezifischen Abständen zwischen der zweiten Unterflur-Radsatzdrehmaschine (1B) und der ersten Unterflur-Radsatzdrehmaschine (1A),
und dass die zweite Schienenstütze (35B) relativ zu der dritten Unterflur-Radsatzdrehmaschine (1C) und/oder relativ zu der vierten Unterflur-Radsatzdrehmaschine (1D) verschiebbar ist.

9. Verfahren nach Anspruch 8,
**dadurch gekennzeichnet, dass**
in Schritt a) eine Unterflur-Radsatzdrehmaschine (1A, 1B, 1C, 1D) nach einem der Patentansprüche 1 bis 7 bereitgestellt wird.

10. Verfahren nach Anspruch 8 oder Anspruch 9,
**dadurch gekennzeichnet, dass**
der Schritt c) den folgenden Teilschritt umfasst:
cb) Einstellen von gespeicherten, fahrzeugspezifischen Abständen zwischen der zweiten und dritten und/oder vierten Unterflur-Radsatzdrehmaschine (1B, 1C, 1D) und der ersten Unterflur-Radsatzdrehmaschine (1A).

11. Verfahren nach Anspruch 10,
**gekennzeichnet durch**
den folgenden Schritt, der nach Schritt ca) und vor, gleichzeitig mit oder nach Schritt cb) durchgeführt wird:
cc) Einstellen einer gespeicherten, fahrzeugspezifischen Position von wenigstens einer Schienenstütze (35A, 35B).

12. Verfahren nach einem der Ansprüche 8 bis 11,
**dadurch gekennzeichnet, dass**
der Schritt d) die folgenden Teilschritte umfasst:
da) Absetzen und Einspannen des ersten zu bearbeitenden Radsatzes (20A) auf der ihm zugeordneten Unterflur-Radsatzdrehmaschine (1A),
db) Messen der tatsächlichen Abstände zwischen den zu bearbeitenden Radsätzen (20A, 20B, 20C, 20D) des Schienenfahrzeugs (26),
dc) Anpassen der voreingestellten Abstände zwischen der zweiten und/oder dritten und/oder vierten Unterflur-Radsatzdrehmaschine (1B, 1C, 1D) und der ersten Unterflur-Radsatzdrehmaschine (1A) an die tatsächlich gemessenen Abstände zwischen den zu bearbeitenden Radsätzen (20A, 20B, 20C, 20D) des Schienenfahrzeugs (26), und
dd) Absetzen und Einspannen des zweiten, dritten und vierten zu bearbeitenden Radsatzes (20B, 20C, 20D) auf den ihnen zugeordneten Unterflur-Radsatzdrehmaschinen (1B, 1C, 1D).

13. Verfahren nach einem der Ansprüche 8 bis 12,
**gekennzeichnet durch**
den folgenden Schritt, der vor Schritt d) durchgeführt wird:
cz) Einfahren der Schiebeschienen (34A, 34B).

## Claims

1. Device (32) for the machining - in particular the simultaneous machining - of multiple wheelsets (20A, 20B) of a rail vehicle (26), comprising:
- a first underfloor wheelset lathe (1A) for reprofiling wheels and brake discs from a first wheelset (20A) of a rail vehicle (26),
- a second underfloor wheelset lathe (1B) for reprofiling wheels and brake discs from a second wheelset (20B) of a rail vehicle (26),
- a third underfloor wheelset lathe (1C) for reprofiling wheels and brake discs from a third wheelset (20C) of a rail vehicle (26), and
- a fourth underfloor wheelset lathe (1D) for reprofiling wheels and brake discs from a fourth wheelset (20D) of a rail vehicle (26),
- wherein a second rail support (35B) is arranged between the third underfloor
wheelset lathe (1C) and the fourth underfloor wheelset lathe (1D),
- wherein the distance between the second underfloor wheelset lathe (1B) and the first underfloor wheelset lathe (1A) is adjustable,
and
- wherein the distance between the third underfloor wheelset lathe (1C) and the first underfloor wheelset lathe (1A) is adjustable and/or
- wherein the distance between the fourth underfloor wheelset lathe (1D) and the first underfloor wheelset lathe (1A) is adjustable,
**characterised in that**
the second rail support (35B) is displaceable relative to the third underfloor wheelset lathe (1C) and/or relative to the fourth underfloor wheelset lathe (1D).

2. Device (32) according to claim 1,
**characterised in that**
the first underfloor wheelset lathe (1A) and/or the second underfloor
wheelset lathe (1B) and/or the third underfloor
wheelset lathe (1C) and/or the fourth underfloor
wheelset lathe (1D) comprises the following:
- a machine stand (3),
- a crossbeam (2) for bridging a workshop track (4) with two rails (4A, 4B) in the transverse direction,
- two roller carriers (7A, 7B),
- four friction rollers (8),
- at least one friction roller drive (9) for driving the friction rollers (8), and
- at least one axial guide roller (19) for axial guidance of the wheelset (20),
- with the crossbeam (2) being mounted on the machine stand (3),
- with the roller carriers (7A, 7B) being movably connected to the machine stand (3), and
- with the friction rollers (8) being rotatably mounted on the roller carrier (7A, 7B).

3. Device (32) according to claim 1 or 2,
**characterised in that**
the first underfloor wheelset lathe (1A) and the second underfloor wheelset lathe (1B) are arranged in opposite directions and/or that a first rail support (35A) is arranged between these two underfloor wheelset lathes (1A, 1B).

4. Device (32) according to claim 3,
**characterised in that**
the first rail support (35A) is displaceable relative to the first underfloor wheelset lathe (1A) and/or relative to the second underfloor wheelset lathe (1B).

5. Device (32) according to one of the claims 1 to 3,
**characterised in that**
the third underfloor wheelset lathe (1C) and the fourth underfloor wheelset lathe (1D) are arranged in opposite directions.

6. Device (32) according to claim 1,
**characterised in that**
the second rail support (35B) is mechanically coupled to the third underfloor wheelset lathe (1C) or to the fourth underfloor
wheelset lathe (1D).

7. Device (32) according to one of the claims 1 to 6,
**characterised by**
a device for controlling the positioning of the underfloor wheelset lathes (1A-1D) and/or the rail supports (35A, 35B).

8. Method for machining, in particular for simultaneously machining, multiple wheelsets (20A, 20B) of a rail vehicle (26), comprising the following steps:
a) Provision of:
- a first underfloor wheelset lathe (1A) for reprofiling wheels and brake discs from a first wheelset (20A) of a rail vehicle (26) and
- a second underfloor wheelset lathe (1B) for reprofiling wheels and brake discs from a second wheelset (20B) of a rail vehicle (26),
b) Provision of at least two wheelsets to be machined (20A, 20B) of a rail vehicle (26),
c) Adjustment of the distance between the second underfloor wheelset lathe (1B) and the first underfloor wheelset lathe (1A),
d) Setting down and clamping of at least two wheelsets (20A, 20B) to be machined on the underfloor wheelset lathes (1A, 1B) assigned to them, and
e) Machining of at least two wheelsets (20A, 20B) to be machined of the rail vehicle (26) on the underfloor wheelset lathes (1A, 1B) assigned to them, with
- a third underfloor wheelset lathe (1C) for reprofiling wheels and brake discs of a
third wheelset (20C) of a rail vehicle (26) and a fourth underfloor wheelset lathe (1D)
for reprofiling wheels and brake discs of a fourth wheelset (20D) of a rail vehicle (26)
being additionally provided in step a),
- four wheelsets to be machined (20A, 20B, 20C, 20D) of a rail vehicle (26) being provided in step b),
- the distance between the third underfloor wheelset lathe (1C) and the first underfloor wheelset lathe (1A) being additionally adjusted in step c), and with the distance between the fourth underfloor wheelset lathe (1D) and the first underfloor wheelset lathe (1A) being adjusted,
- in step d), four wheelsets (20A, 20B, 20C, 20D) to be machined being set down and clamped on the underfloor wheelset lathes (1A, 1B, 1C, 1D) assigned to them,
- in step e), the third wheelset (20C) and/or the fourth wheelset (20D) of the rail vehicle (26) being additionally machined on the underfloor wheelset lathes (1C, 1D) associated with them, and
- in step a), a second rail support (35B) being provided between the third underfloor wheelset lathe (1C) and the fourth underfloor wheelset lathe (1D),
**characterised in that**
step c) comprises the following substeps:
ca) determining the type of rail vehicle (26) with the wheelsets to be machined (20A, 20B, 20C, 20D), and
cb) setting stored, vehicle-specific distances between
the second underfloor wheelset lathe (1B) and the first underfloor wheelset lathe (1A),
and that the second rail support (35B) is displaceable relative to the third underfloor wheelset lathe (1C) and/or relative to the fourth underfloor wheelset lathe (1D).

9. Method according to claim 8,
**characterised in that**
in step a) an underfloor wheelset lathe (1A, 1B, 1C, 1D) according to one of the patent claims 1 to 7 is provided.

10. Method according to claim 8 or claim 9,
**characterised in that**
step c) comprises the following substep:
cb) setting stored, vehicle-specific distances between the second and third and/or fourth underfloor wheelset lathes (1B, 1C, 1D) and the first underfloor wheelset lathe (1A).

11. Method according to claim 10,
**characterised by**
the following step carried out after step ca) and before, simultaneously with or after step cb):
cc) setting a stored, vehicle-specific position of at least one rail support (35A, 35B).

12. Method according to any one of claims 8 to 11,
**characterised in that**
step d) comprises the following substeps:
da) setting down and clamping the first wheelset (20A) to be machined on the underfloor wheelset lathe (1A) assigned to it,
db) measuring the actual distances between the wheelsets (20A, 20B, 20C, 20D) to be machined of the rail vehicle (26),
dc) adapting the preset distances between the second and/or third and/or fourth underfloor wheelset lathes (1B, 1C, 1D) and the first underfloor wheelset lathe (1A) to the actually measured distances between the wheelsets to be machined (20A, 20B, 20C, 20D) of the rail vehicle (26), and
dd) setting down and clamping the second, third and fourth
wheelset to be machined (20B, 20C, 20D) on the underfloor wheelset lathes (1B, 1C, 1D) assigned to them.

13. Method according to any one of claims 8 to 12, **characterised by**
the following step performed prior to step d):
cz) Retracting the slide rails (34A, 34B).

## Revendications

1. Dispositif (32) d'usinage, destiné en particulier à l'usinage simultané de plusieurs essieux montés (20A, 20B) d'un véhicule sur rail (26), comprenant les éléments suivants :
- un premier tour à trains de roues en fosse (1A) servant au reprofilage des roues et des disques de frein du premier essieu monté (20A) d'un véhicule sur rail (26),
- un deuxième tour à trains de roues en fosse (1B) servant au reprofilage des roues et des disques de frein du deuxième essieu monté (20B) d'un véhicule sur rail (26),
- un troisième tour à trains de roues en fosse (1C) servant au reprofilage des roues et des disques de frein du troisième essieu monté (20C) d'un véhicule sur rail (26), et
- un quatrième tour à trains de roues en fosse (1D) servant au reprofilage des roues et des disques de frein du quatrième essieu monté (20D) d'un véhicule sur rail (26),
- dans lequel un deuxième support de rail (35B) est placé entre le troisième tour à trains de roues en fosse (1C) et le quatrième tour à trains de roues en fosse
(1D),
- dans lequel l'écart entre le deuxième tour à trains de roues en fosse (1B) et le premier tour à trains de roues en fosse (1A) est ajustable,
et
- dans lequel l'écart entre le troisième tour à trains de roues en fosse (1C) et le premier tour à trains de roues en fosse (1A) est ajustable, et/ou
- dans lequel l'écart entre le quatrième tour à trains de roues en fosse (1D) et le premier tour à trains de roues en fosse (1A) est ajustable, ayant pour caractéristique que
le deuxième support de rail (35B) peut être déplacé par rapport au troisième tour à trains de roues en fosse (1C) et/ou par rapport au quatrième tour à trains de roues en fosse (1D).

2. Dispositif (32) selon la revendication 1,
ayant pour caractéristique que
le premier tour à trains de roues en fosse (1A) et/ou le deuxième tour à trains de roues en fosse (1B) et/ou le troisième tour à trains de roues en fosse (1C) et/ou le quatrième tour à trains de roues en fosse (1D) comprend les éléments suivants :
- un bâti de machine (3),
- une traverse (2) pour le pontage d'un quai d'atelier (4), laquelle est équipée de
- deux rails (4A, 4B) dans le sens transversal,
- deux porte-galets (7A, 7B),
- quatre galets de friction (8), - au moins un entraînement à galets de friction (9) assurant l'entraînement des galets de friction (8),
et
- au moins un galet de guidage axial (19) assurant le guidage axial de l'essieu monté (20),
- dans lequel la traverse (2) est montée sur le bâti de machine (3),
- dans lequel les porte-galets (7A, 7B) sont reliés de manière mobile au bâti de machine (3), et
- dans lequel les galets de friction (8) sont montés sur le porte-galets (7A, 7B) avec une possibilité de rotation.

3. Dispositif (32) selon la revendication 1 ou 2,
**ayant pour caractéristique que**
le premier tour à trains de roues en fosse (1A) et le deuxième tour à trains de roues en fosse (1B) sont placés en sens opposé et/ou qu'un premier support de rail (35A) est placé entre ces deux tours à trains de roues en fosse (1A, 1B).

4. Dispositif (32) selon la revendication 3,
**ayant pour caractéristique que**
le premier support de rail (35A) peut être déplacé par rapport au premier tour à trains de roues en fosse (1A) et/ou par rapport au deuxième tour à trains de roues en fosse (1B).

5. Dispositif (32) selon l'une des revendications 1 à 3,
**ayant pour caractéristique que**
le troisième tour à trains de roues en fosse (1C) et le quatrième tour à trains de roues en fosse (1D) sont placés en sens opposé.

6. Dispositif (32) selon la revendication 1,
**ayant pour caractéristique que**
le deuxième support de rail (35B) est mécaniquement couplé au troisième tour
à trains de roues en fosse (1C) ou au quatrième tour à trains de roues en fosse (1D).

7. Dispositif (32) selon l'une des revendications 1 à 6,
**ayant pour caractéristique**
un système de commande du positionnement des tours à trains de roues en fosse (1A à 1D) et/ou des supports de rails (35A, 35B).

8. Procédé d'usinage, destiné en particulier à l'usinage simultané de plusieurs essieux montés (20A, 20B) d'un véhicule sur rail (26), comprenant les étapes suivantes :
a) la fourniture :
- d'un premier tour à trains de roues en fosse (1A) servant au reprofilage
des roues et des disques de frein du premier essieu monté (20A) d'un véhicule sur rail (26) et
- d'un deuxième tour à trains de roues en fosse (1B) servant au reprofilage des roues et des disques de frein du deuxième essieu monté (20B) d'un véhicule sur rail (26),
b) la fourniture d'au moins deux essieux montés à usiner (20A, 20B) d'un véhicule sur rail (26),
c) l'ajustement de l'écart entre le deuxième tour à trains de roues en fosse (1B) et le premier tour à trains de roues en fosse (1A),
d) la dépose et le serrage d'au moins deux essieux montés à usiner (20A, 20B) sur leurs tours à trains de roues en fosse respectifs (1A, 1B), et
e) l'usinage d'au moins deux essieux montés à usiner (20A, 20B) du véhicule sur rail (26) sur leurs tours à trains de roues en fosse respectifs (1A, 1B), dans lequel
- à l'étape a), un troisième tour à trains de roues en fosse (1C) servant au reprofilage des roues et des disques de frein d'un troisième essieu monté (20C) d'un véhicule sur rail (26) et un quatrième tour à trains de roues en fosse (1D) servant au reprofilage des roues et des disques de frein d'un quatrième essieu monté (20D) d'un véhicule sur rail (26) sont également fournis,
à l'étape b), quatre essieux montés à usiner (20A, 20B, 20C et 20D) d'un véhicule sur rail (26) sont fournis,
- à l'étape c), l'écart entre le troisième tour à trains de roues en fosse (1C) et le premier tour à trains de roues en fosse (1A), ainsi que l'écart entre le quatrième tour à trains de roues en fosse (1D) et le premier tour à trains de roues en fosse (1A) sont également ajustés,
- à l'étape d), les quatre essieux montés à usiner (20A, 20B, 20C et 20D) sont déposés et serrés sur leurs tours à trains de roues en fosse respectifs (1A, 1B, 1C et 1D),
- à l'étape e), le troisième essieu monté (20C) et/ou le quatrième essieu monté (20D) du véhicule sur rail (26) sont également usinés sur leurs tours à trains de roues en fosse respectifs (1C, 1D), et
- dans lequel, à l'étape a), un deuxième support de rail (35B) est fourni entre le troisième tour à trains de roues en fosse (1C) et le quatrième tour à trains de roues en fosse (1D),
**ayant pour caractéristique que**
l'étape c) comprend les étapes intermédiaires suivantes :
ca) la détermination du type de véhicule sur rail (26) avec les essieux montés à usiner (20A, 20B, 20C et 20D), et
cb) l'ajustement des écarts spécifiques au véhicule enregistrés entre le deuxième tour à trains de roues en fosse (1B) et le premier tour à trains de roues en fosse (1A),
et que le deuxième support de rail (35B) peut être déplacé par rapport au troisième
tour à trains de roues en fosse (1C) et/ou par rapport au quatrième tour à trains de roues en fosse (1D).

9. Procédé selon la revendication 8,
**ayant pour caractéristique que**
l'étape a), un tour à trains de roues en fosse (1A, 1B, 1C et 1D) est fourni selon l'une des revendications de brevet 1 à 7.

10. Procédé selon la revendication 8 ou 9,
**ayant pour caractéristique que**
l'étape c) comprend l'étape intermédiaire suivante :
cb) l'ajustement des écarts spécifiques au véhicule enregistrés entre le deuxième et le troisième et/ou le quatrième tour à trains de roues en fosse (1B, 1C et 1D) et le premier tour à trains de roues en fosse (1A).

11. Procédé selon la revendication 10,
**ayant pour caractéristique**
l'étape suivante, qui est à effectuer après l'étape ca) et avant, en même temps que ou après l'étape cb) :
cc) l'ajustement de la position spécifique au véhicule enregistrée d'au moins l'un des supports de rail (35A, 35B).

12. Procédé selon l'une des revendications 8 à 11,
**ayant pour caractéristique que**
l'étape d) comprend les étapes intermédiaires suivantes :
da) la dépose et le serrage du premier essieu monté à usiner (20A) sur son tour à trains de roues en fosse respectif (1A),
db) la mesure des écarts réels entre les essieux montés à usiner (20A, 20B, 20C et 20D) du véhicule sur rail (26),
dc) l'adaptation des écarts préajustés entre le deuxième et/ou le troisième et/ou le quatrième tour à trains de roues en fosse (1B, 1C et 1D) et le premier tour à trains de roues en fosse (1A) en fonction des écarts réels
mesurés entre les essieux montés à usiner (20A, 20B, 20C et 20D) du véhicule sur rail (26), et
dd) la dépose et le serrage des deuxième, troisième et quatrième essieux montés à usiner (20B, 20C et 20D) sur leurs tours à trains de roues en fosse respectifs (1B, 1C et 1D).

13. Procédé selon l'une des revendications 8 à 12,
**ayant pour caractéristique**
l'étape suivante, qui est à effectuer avant l'étape d) :
cz) le rodage des rails coulissants (34A et 34B).
